Europäisches Patentamt

European Patent Office

Office européen des brevets

(19)

(11) Veröffentlichungsnummer: **0 244 394 B1**

# EUROPÄISCHE PATENTSCHRIFT

(12)

(45) Veröffentlichungstag der Patentschrift: **17.06.92**

(51) Int. Cl.⁵: **G01N 21/77**, H01L 31/02, G02B 6/12

(21) Anmeldenummer: **87890075.2**

(22) Anmeldetag: **14.04.87**

(54) **Sensorelement zur Bestimmung von Stoffkonzentrationen.**

(30) Priorität: **23.04.86 AT 1094/86**
**10.10.86 AT 2707/86**

(43) Veröffentlichungstag der Anmeldung:
**04.11.87 Patentblatt 87/45**

(45) Bekanntmachung des Hinweises auf die
Patenterteilung:
**17.06.92 Patentblatt 92/25**

(84) Benannte Vertragsstaaten:
**AT CH DE FR GB LI**

(56) Entgegenhaltungen:
EP-A- 0 048 146     EP-A- 0 127 106
EP-A- 0 154 962     WO-A-86/07149
DE-A- 3 429 562     DE-A- 3 532 563

PATENT ABSTRACTS OF JAPAN, Band 7, Nr.
276 (E-215)[1421], 9. Dezember 1983; & JP-
A-58 155 778

PATENT ABSTRACTS OF JAPAN, Band 2, Nr.
129 (E-7810)[7848], 27. Oktober 1978; & JP-
A-53 96 784

(73) Patentinhaber: **AVL Medical Instruments AG**
**Stettemerstrasse 28**
**CH-8207 Schaffhausen(CH)**

(72) Erfinder: **Marsoner, Hermann, Dipl.-Ing.Dr.**
**Roseggersiedung 2**
**A-8153 Steinberg(AT)**
Erfinder: **Kroneis, Herbert, Dipl.-Ing.Dr.**
**Jakob Gschiel-Gasse 8/21**
**A-8052 Graz(AT)**
Erfinder: **Karpf, Hellfried, Dr.**
**Leechgasse 78**
**A-8010 Graz(AT)**
Erfinder: **Wolfbeis, Otto S., Dr.**
**Im Hoffeld 32**
**A-8046 Graz(AT)**
Erfinder: **List, Helmut, Dipl.-Ing.**
**Bogengasse 36**
**A-8010 Graz(AT)**
Erfinder: **Leitner, Alfred, Dr.**
**Theodor-Körner-Strasse 151**
**A-8010 Graz(AT)**

(74) Vertreter: **Krause, Walter, Dr. Dipl.-Ing. et al**
**Postfach 200 Singerstrasse 8**
**A-1010 Wien(AT)**

EP 0 244 394 B1

PROCEEDINGS OF THE INTERNATIONAL MEETING ON CHEMICAL SENSORS,Fukuoka, 19.-22. September 1983, ANALYTICAL CHEMISTRY SYMPOSIA SERIES, Band 17, Seiten 496-500, Elsevier, Amsterdam, NL; W.H. KO et al.: "Multiple ISFET with integrated circuits"

## Beschreibung

Die Erfindung betrifft ein Sensorelement zur Bestimmung von Stoffkonzentrationen in gasförmigen und flüssigen Proben, mit einer Trägerschicht, sowie einer Indikatorschicht mit mindestene einer Indikatorsubstanz, wobei sich mindestens eine optische Eigenschaft der Indikatorsubstanz bei Wechselwirkung mit dem zu messenden Stoff abhängig von dessen Konzentration ändert.

Optische Sensoren zur Messung von Stoffkonzentrationen mit Indikatorsubstanzen, insbesondere solche, die auf Änderung der Fluoreszenzeigenschaften der Indikatorsubstanz durch Wechselwirkung mit dem zu messenden Stoff beruhen, sind seit längerer Zeit Stand der Technik. Aus der DE-PS 25 08 637 ist beispielsweise ein Sensorelement der eingangs genannten Art bekannt, bei welchem eine dünne Schicht der Indikatorlösung auf einem geeigneten Trägermaterial aufgebracht ist, wobei die Indikatorlösung durch eine für den zu messenden Stoff permeable Membran abgedeckt ist. An der Trägerseite dieser Anordnung ist eine aufwendige Beleuchtungs- und Lichtmeßeinrichtung mit einer Reihe optischer Elemente, sowohl im Weg der Anregungsstrahlung als auch der Fluoreszenzstrahlung angeordnet.

In einer aus der DD-PS 106 086 bekannten Anordnung befindet sich der Fluoreszenzindikator in einer über eine Meß- und eine Referenzmeßkammer reichenden Schicht, wobei diese Indikatorschicht jedoch im Bereich der Referenzmeßkammer gegenüber den zu untersuchenden Medium abgedeckt ist. Aus der Differenz der Fluoreszenzintensität bezüglich der Meß- und der Referenzmeßkammer wird direkt auf die Konzentration des zu messenden Stoffes geschlossen. Das Fluoreszenzlicht aus den beiden Meßkammern wird hier mit Hilfe von Fiber-Lichtleitern je einem fotoelektrischen Wandler zugeleitet.

Die genannten Sensoren bestehen somit in der Regel aus einem Reaktionsraum, der in Form einer dünnen Schicht ausgebildet sein kann, in der sich in einer bestimmten geometrischen Anordnung die Indikatorsubstanz befindet. Von einer der Probe abgewandten Seite her wird durch eine Lichtquelle und geeignete optische Einrichtungen, wie z.B. Lichtleiter oder Lichtfasern, Licht einer bestimmten Wellenlänge der Indikatorschicht zugeführt. Das von der Indikatorschicht diffus reflektierte bzw. nach allen Seiten ausgesandte Fluoreszenzlicht, wird meist von der selben Seite des Reaktionsraumes bzw. der Indikatorschicht wiederum mit Hilfe geeigneter optischer Mittel und entsprechender Filtereinrichtungen einem Fotodetektor zugeführt. Die der optischen Einrichtung abgewandte Seite des Reaktionsraumes wird mit der gasförmigen oder flüssigen Probe in Kontakt gebracht, wobei die zu messende Substanz in der Regel durch Diffusion in den Reaktionsraum gelangen kann und mit den Indikatormolekülen der Indikatorsubstanz eine Wechselwirkung eingeht, die deren optischen Eigenschaften, insbesondere die Absorptions- bzw. Fluoreszenzeigenschaften abhängig von der Stoffkonzentration ändert. Der Grad und der Charakter dieser Änderung steht mit der zu messenden Teilchenkonzentration in einem funktionalen Zusammenhang.

Weitere Anordnungen sind aus den Dokumenten EP-A-0127106, DE-A-3532563 und DE-A-3429562 bekannt.

Die Größe derartiger Anordnungen wird einerseits durch die Größe des Sensors selbst und andererseits durch die Geometrie und die Größe der optischen Einrichtungen, welche insbesondere für die Abfuhr der Fluoreszenz- oder Reflexionsstrahlung notwendig sind, bestimmt. Es stellt sich somit bei derartigen Sensoren, beispielsweise bei der Verwendung in Mikroanalysengeräten, die Aufgabe, diese extrem zu verkleinern, sowie massentechnologisch einfach herstellen zu können, wobei die Verwendungsmöglichkeit möglichst vieler bekannter Reaktionsräume bzw. Indikatorschichten gegeben sein soll.

Diese Aufgabe wird erfindungsgemäß dadurch gelöst, daß auf der Trägerschicht mindestens ein fotoempfindliches Element und dessen elektrische Kontaktierung in planarer Anordnung integriert sind , sowie daß die von der Anregungsstrahlung angeregte Indikatorsubstanz der Indikatorschicht mit den fotoempfindlichen Elementen in optischem Kontakt steht. Alle Schichten des Sensors werden dabei durch übliche mikroelektronische bzw. fotolithographische Techniken, wie Aufdampfen, Sputtern, Aufspinnen, Ätzen, Ionenstrahlerodieren u.s.w. hergestellt, wobei durch die Integration der fotoempfindlichen Elemente und deren elektrischen Kontaktierung in einem beispielsweise als Dünnschicht vorliegenden Substrat des Sensorelementes die geforderte extreme Miniaturisierung der gesamten Sensorik, einschließlich der Einrichtungen zur Erfassung der Fluoreszenz- bzw. der Reflexionsstrahlung erreicht werden kann. Es erfolgt somit in vorteilhafter Weise die Erfassung der zu messenden Strahlung bereits im Sensorelement selbst, wodurch alle früher notwendigen optischen Einrichtungen zur Lichtmessung außerhalb des Sensorelementes wegfallen. Die Meßsignale werden über entsprechende elektrische Leitungen direkt einer Anzeige- oder Auswerteelektronik zugeleitet.

Die elektrische Kontaktierung der optoelektrischen Bauteile innerhalb des Sensorelementes stellt weiters keine Einschränkung im Sinne der vorliegenden Erfindung dar, denn die entsprechenden Kontaktbahnen können ebenfalls mit bekannten mikroelektronischen Techniken erzeugt werden.

Vorteilhafterweise können beim erfindungsgemäßen Sensorelement bekannte, für verschiedene spezielle Aufgaben optimierte Indikatorschichten verwendet werden. Ausbildungen verschiedener Indikatorschichten für derartige optische Sensoren, basierend auf der Änderung der Absorption oder der Fluoreszenz von Indikatormolekülen, insbesondere für die Messung von Sauerstoff, $CO_2$ und von pH-Werten bzw. sonstigen Ionenkonzentrationen sind aus der EPA 0 109 958, EPA 0 109 959 bzw. der EPA 0 105 870 bekannt, und können in vorteilhafter Weise im Zusammenhang mit der vorliegenden Erfindung verwendet werden.

Es ist natürlich auch möglich, eine Sensorschicht entsprechend der US-PS 4 568 518 zu verwenden, wobei eine Trägermembran, beispielsweise aus Cellulose, von einem unabhängigen Netzwerk durchdrungen ist, welches aus Indikatormaterial und reaktive Gruppen enthaltenden Material aufgebaut ist.

Um günstigere Anregungsverhältnisse für die Indikatorsubstanz zu schaffen, oder um die Anregungsstrahlung von der zu messenden Strahlung besser trennen zu können, kann es bei bestimmter Geometrie in einer Ausgestaltung der Erfindung erforderlich sein, daß sich zwischen einem die fotoempfindlichen Elemente enthaltenden Substrat, welches mindestens einen Bereich aufweist, der für die Anregungsstrahlung durchlässig ist, und der Indikatorschicht eine für die Anregungsstrahlung und die zu messende Strahlung durchlässige Kopplungsschicht befindet. Die optisch durchlässige Kopplungsschicht, z.B. $SiO_2$, kann durch eine geeignete mikroelektronische Technik, z.B. Sputtern, aufgebracht werden. Die Stärke dieser Schicht hängt von der Geometrie der topographischen Anordnung der einzelnen fotoempfindlichen Elemente ab. Es ist jedoch auch möglich, daß das Substrat, in welchem die fotoempfindlichen Elemente vorliegen, aus dem selben Material bestehen, wie die Kopplungsschicht, nämlich dann, wenn die fotoempfindlichen Elemente und ihre elektrische Kontaktierung direkt auf die Trägerschicht aufgebracht und anschließend in die Kopplungsschicht eingegossen werden. Über den Einzelelementen bzw. der optischen Kopplungsschicht wird über den Bereich der gesamten Anordnung eine meist aus Polymer bestehende Indikatorschicht mit dem Fluoreszenzindikator angeordnet.

Zur besseren optischen geometrischen Trennung der Anregungsstrahlung von der zu messenden Strahlung kann in einer weiteren Ausgestaltung der Erfindung vorgesehen sein, daß die einen Brechungsindex $n_2$ aufweisende Kopplungsschicht zusammen mit beiderseits vorliegenden Grenzschichten mit einem Brechungsindex $n_1$ einen planaren Lichtleiter für die zu messende Strahlung bildet, wobei $n_2 > n_1$ gilt, daß die der Probe zugewandte Grenzschicht mindestens eine Aussparung aufweist, in welcher die Indikatorschicht vorliegt, daß jede Aussparung - in Richtung der Anregungsstrahlung gesehen - über einem für die Anregungsstrahlung durchlässigen Bereich liegt, sowie daß die Totalreflexion der zu messenden Strahlung im Bereich der fotoempfindlichen Elemente aufgehoben ist. Die für den Lichtleiter notwendigen Glasschichten können durch reaktiv unterstütztes Sputtern aufgebracht werden. Die lichtleitende Zentralschicht bzw. Kopplungsschicht muß dicker als 1 $\mu$m sein, was einem Vielfachen der Wellenlänge der zu messenden Strahlung entspricht, um diese gut leiten zu können. Die beiderseits vorliegenden Grenzschichten müssen 1 bis 2 $\mu$m stark sein, um für das evaneszente Feld der zu leitenden Welle ausreichend dimensioniert zu sein. Bei dieser Anordnung hat die Divergenz der Anregungsstrahlung nur eine geringe Bedeutung, da Randstrahlen wegen des steilen Winkels an der Grenzfläche $n_2/n_1$ verloren gehen.

Eine besonders vorteilhafte Ausgestaltung der Erfindung ist dadurch gegeben, daß nur ein für die Anregungsstrahlung durchlässiger Bereich vorliegt und das fotoempfindliche Element, beispielsweise eine Fotodiode, eine dazu konzentrische, kreisringförmige Struktur aufweist. Ein derartiger Sensor könnte beispielsweise dadurch realisiert werden, daß aus einem Wafer, der bereits alle Schichten einer Fotodiode (als fotoempfindliches Element) trägt, eine ringförmige Diodenstruktur herausgeätzt wird. Durch Sputtern wird dann die entstandene zentrale kreisförmige Öffnung mit Glas mit Brechungsindex $n_1$ homogen aufgefüllt. Darüber wird wieder eine Glas- bzw. Kunststoffschicht mit Brechungsindex $n_2$ aufgesputtert bzw. aufgespinnt. $n_2$ muß größer als $n_1$ sein, um Totalreflexion in der Schicht mit dem Brechungsindex $n_2$ zu erreichen. Aus der letzten Schicht wird eine zentrale Scheibe herausgeätzt, um Raum für die Sensorschicht zu bilden. Anschließend wird das Ausgangssubstrat bis zur ersten Glasschicht aufgebohrt, um einen Zugang für die Anregungsstrahlung zu schaffen. In die zentrale Aussparung für die Sensorschicht wird nun beispielsweise zur Herstellung eines Gassensors die farbstoffhaltige Silikonschicht (Brechungsindex $n_2$) eingebracht. Wesentlich dabei ist es, daß die Silikonschicht einen ähnlichen Brechungsindex wie die darunterliegende Schicht aufweist, um das gesamte Sensorvolumen möglichst vollständig zu nutzen.

Eine besondere Ausführungsform der Erfindung sieht vor, daß im Substrat durchlässige Bereiche schräg angeordnet sind, sodaß die Anregungsstrahlung vorzugsweise mit einem Winkel $\alpha$ zwischen 40 und 60° auf die Indikatorschicht auftrifft und die über den fotoempfindlichen Elementen liegenden Bereiche der Indikatorschicht anregt. Durch die vorgeschlagene Anregungsgeometrie kommt es zu einer besonders guten Anregung der über den fotoempfindlichen Elementen liegenden Bereiche der Indikatorschicht wodurch die Nutzsignalausbeute des Sensors erhöht werden kann.

Für eine besonders günstige Zuleitung der Anregungsstrahlung ist erfindungsgemäß vorgesehen,daß in den für die Anregungsstrahlung durchlässigen Bereichen das Ende eines Lichtleiters, insbesondere einer Single-Fibre, endet, sowie daß in den für die Anregungsstrahlung durchlässigen Bereichen eine Filterschicht, insbesondere ein optisches Interferenzfilter, vorliegt. Es kann somit direkt im Sensor die für die Anregung der Indikatorsubstanz günstigste Wellenlänge aus der Anregungsstrahlung herausgefiltert werden. Die elektrischen Leitungen, welche die Meßsignale tragen, können dabei vorteilhaft zusammen mit dem Lichtleiter geführt werden, wobei auch genormte Steckverbindungen (Ausführung z.B. als BNC-Stecker oder analoger Stecker für die Lichtleiterverbindung) für Signal und Lichtleitung Verwendung finden können.

Eine besonders vorteilhafte Weiterbildung der Erfindung sieht vor, daß die in Mikrozonen vorliegenden fotoempfindlichen Elemente, sowie in benachbarten Mikrozonen angeordnete, lichtemittierende Quellen, zusammen mit deren elektrischen Zu- und Ableitungen in planarer Anordnung auf der Trägerschicht integriert sind, sowie daß die Indikatorsubstanz der Indikatorschicht mit den lichtemittierenden Quellen und den fotoempfindlichen Elementen in optischem Kontakt steht. Durch die zusätzliche Integration der lichtemittierenden Quellen wird eine weitere Miniaturisierung der gesamten Sensorik möglich. In vorteilhafter Weise weist dieses Sensorelement nur mehr elektrische Anschlüsse auf, wodurch überhaupt alle optischen Einrichtungen außerhalb des Sensorelementes wegfallen. Dabei werden auf einer geeigneten Trägerschicht in einer bestimmten topographischen Anordnung in benachbarten Mikrozonen eine Mehrzahl von lichtemittierenden oder elektrolumineszierenden Halbleiterzonen angebracht, denen in enger räumlicher Nachbarschaft fotoempfindliche Halbleiterzonen in Form von Fotodioden oder Fototransistoren zwischengelagert sind. Solche lichtemittierenden Quellen können durch lichemittierende Diodenstrukturen oder in Form von Dünnfilmstrukturen (z.B. H.Antson et al: Characterization of Thin-Film Electroluminescent Structures by SIMS and other Analytical Techniques; Anal.Chem. (1985) 322, p 175-180) realisiert werden, welche Elektrolumineszenz aufweisen. Derartige Halbleiterstrukturen können durch übliche mikroelektronische Techniken auf einem geeigneten Substrat in Abmessungen von wenigen Mikrometern aufgebracht werden. Die lichtemittierenden Zonen bzw. Quellen, sind elektrisch so verbunden, daß sie gemeinsam durch Anlegen einer bestimmten Spannung, bzw. durch einen Stromfluß bestimmter Größe zur Aussendung der gewünschten Lichtstrahlung angeregt werden. Die Halbleiterwissenschaft kennt eine Reihe von Materialien, aus denen beispielsweise lichtemittierende Dioden oder elektrolumineszierende Schichten aufgebaut sein müssen, damit eine bestimmte gewünschte Wellenlänge bei elektrischer Anregung ausgesandt wird. Weitere Vorteile dieses Sensors sind dessen massentechnologisch einfache Herstellbarkeit.

Bei der Bestimmung von Elektrolytkonzentrationen in wäßrigen Lösungen kann - nach einem älteren Vorschlag - die sich an der ionenselektiven Schicht einer ionenselektiven Elektrode einstellende Potentialdifferenz, welche ein Maß für die Elektrolytkonzentration ist, dadurch gemessen werden, daß an der ionenselektiven Schicht ein potentialsensitiver Fluoreszenzindikator angebracht wird, dessen Fluoreszenzintensität gemessen wird. Wird nun ein Sensorelement nach der vorliegenden Erfindung mit einer Indikatorschicht nach obigem Vorschlag ausgestattet, erhält man einen Sensor mit extrem kleinen Abmessungen.

Zur Verteilung des emittierten und zurückgesandten Lichtes kann es auch hier erfindungsgemäß erforderlich sein, daß sich zwischen den lichtemittierenden Quellen und/oder den fotoempfindlichen Elementen einerseits und der Indikatorschicht andererseits eine optisch durchlässige Kopplungsschicht befindet.

Es ist jedoch durchaus möglich, daß die lichtemittierenden Quellen und die fotoempfindlichen Elemente nicht auf dem selben Substrat integriert werden können, sodaß nach einer Weiterbildung der Erfindung vorgeschlagen wird, daß die die lichtemittierenden Quellen bildenden Halbleiterstrukturen und gegebenenfalls ihre elektrische Kontaktierung auf einem eigenen Substrat integriert sind, welches Substrat in jenen Mikrozonen der Trägerschicht aufgebracht ist, die von lichtemittierenden Quellen besetzt sind. Es wird z.B. auf einem Grundsubstrat, nämlich der Trägerschicht, auf dem die eine Sorte von Fotohalbleitern aufgebracht werden kann (z.B. die fotoempfindlichen Elemente) an jenen Stellen, wo die andere Struktur integriert wird, vorher ein Co-Substrat überlagert. Es ist natürlich auch möglich, vor der Aufbringung der fotoempfindlichen Elemente ein weiteres Co-Substrat vorgesehen.

Es bestehen prinzipiell keine Einschränkungen im Bezug auf die topographische Anordnung der lichtemittierenden und lichtempfindlichen Bauteile. Es ist lediglich zu fordern, daß jeweils eine oder mehrere lichtemittierende Quellen in Nachbarschaft zu einer oder mehreren fotoempfindlichen Elementen stehen. Dabei ist es erfindungsgemäß möglich, die Mikrozonen auf der Trägerschicht schachbrettartig anzuordnen, wobei die Mikrozonen abwechselnd von einer lichtemittierenden Quelle und einem fotoempfindlichen Element besetzt sind.

Es ist jedoch in einer anderen Ausgestaltung der Erfindung auch möglich, die Mikrozonen auf der Trägerschicht wabenförmig anzuordnen, wobei jeweils einer lichtemittierenden Quelle zumindest zwei äquidistante mit unterschiedlichem Filtermaterial versehene fotoempfindliche Elemente zugeordnet sind. Jede lichtemittierende Quelle erreicht durch seine geometrische Emissionscharakteristik in der darüberliegenden Indikatorschicht lediglich einen bestimmten Teil der Indikatorsubstanz und regt diese zur Fluoreszenz an. Von dort aus wird das Fluoreszenzlicht der Indikatorsubstanz im Prinzip nach allen Richtungen gleichmäßig abgestrahlt und erreicht zumindest zwei der äquidistant angeordneten fotoempfindlichen Elemente. Diese können, ausgestattet mit Filtermaterial unterschiedlicher Durchlässigkeit für verschiedene Wellenlängen, die Intensität des Fluoreszenzspektrums in mehreren Wellenlängenbereichen gleichzeitig bestimmen. Es ist natürlich auch möglich, bei der obengenannten sechseckigen Wabenstruktur jeweils ein fotoempfindliches Element mit mehreren lichtemittierenden Quellen zu umgeben, wenn die Signalausbeute des Sensorelementes dadurch erhöht werden kann.

Schließlich ist in einer weiteren Anordnung nach der Erfindung vorgesehen, daß die lichtemittierenden Quellen vorzugsweise LEDs, jeweils von einem fotoempfindlichen Element kreisringförmiger Struktur, vorzugsweise von einer Fotodiode oder einem Fototransistor, umgeben sind. Hier bilden Sender und Empfänger, d.h. beispielsweise Fotodiode und Fototransistor, eine integrale Einheit. Der Vorteil dieser Anordnung besteht in einer besseren Effizienz in der Ausnützung der Reflexion bzw. Fluoreszenz der Indikatormoleküle, da es zu einer wesentlich stärkeren Überlappung zwischen Abstrahlungswinkel der Lichtquelle bzw. Aufnahmewinkel des Fotoempfängers kommt. Es ist natürlich auch möglich, anstelle der ringförmigen viereckige Strukturen zu verwenden. Wieder können mehrere solche Anordnungen nebeneinander geschaltet werden und durch geeignete Belegung mit Indikatorschichten bzw. allfälligen optischen Filtern für verschiedene analytische Größen empfindlich gemacht werden.

Die beschriebenen Anordnungen sind vorzugsweise für die Verwendung von fluoreszierenden Indikatorfarbstoffen gedacht, es können aber ebenso Absorptionsindikatoren angewendet werden. Fluoreszenzindikatoren haben dabei jedoch den Vorteil, daß die Wellenlänge des Anregungslichtes und die des Fluoreszenzlichtes durch die sogenannte Stokesschift, also eine Wellenlängendifferenz, deutlich voneinander getrennt sind und durch optische Filter auf der Seite der lichtemittierenden Quellen sowie auf der Seite der fotoempfindlichen Elemente bzw. an beiden Stellen sehr scharf voneinander getrennt werden können, was ein zusätzliches Hilfsmittel zur Vermeidung von unerwünschten Störungen bei der Messung darstellt.

Zur Umgehung des Problems, daß unter Umständen die lichtemittierenden Quellen und die fotoempfindlichen Elemente nicht auf der gleichen Trägerschicht aufgebracht werden können und ein geeignetes Co-Substrat nicht zur Verfügung steht, kann in einer Weiterbildung der Erfindung vorgesehen sein, daß die lichtemittierenden Quellen einerseits und die fotoempfindlichen Elemente andererseits in zueinander parallelen Ebenen vorliegen, wobei die lichtemittierenden Quellen vorzugsweise eine zusammenhängende, lumineszierende Schicht bilden, welche auf der Trägerschicht aufgebracht ist, sowie daß die die fotoempfindlichen Elemente bildenden Halbleiterstrukturen auf einem die lumineszierende Schicht bedeckenden Substrat integriert sind und daß das Substrat Bereiche aufweist, die einen optischen Kontakt der lumineszierenden Schicht mit der Indikatorschicht ermöglichen. Auf einem Grundsubstrat können dabei die fotoempfindlichen Elemente aufgebracht werden und die darüberliegenden, bereits früher beschriebenen Schichten, einschließlich der Indikatorschicht, tragen. Unterhalb dieses lichtdurchlässige Bereiche aufweisenden Substrates befinden sich die lichtemittierenden Quellen geeigneter Wellenlänge, welche durch die zwischen den fotoempfindlichen Elementen freibleibenden Zwischenräume das Anregungslicht liefern. Diese Lichtquellen können beispielsweise auch durch eine einzige elektrolumineszierende Schicht realisiert werden. In einer anderen möglichen Variante könnte allerdings die Sensorstruktur, welche keine lichtemittierenden Elemente selbst enthält, auf einer separat gefertigten, lichtemittierenden Einrichtung in Hybrid-Technik, z.B. durch Verkleben, aufgebracht werden.

Bei optisch nicht durchlässigen Substraten können die für den optischen Kontakt benötigten Bereiche des Substrates durch Ätzen von Löchern oder durch das Einbringen von Perforationen mittels Lasertechnik erhalten werden.

Es ist klar, daß sich das obenbeschriebene Prinzip der Anbringung der elektrooptischen Komponenten in verschiedenen Ebenen auch umkehren läßt, sodaß die lichtemittierenden Quellen auf einem gegebenenfalls lichtdurchlässigen Substrat vorliegen und sich die fotoempfindlichen Elemente unterhalb dieses Substrates befinden.

In einer Weiterbildung der Erfindung kann sich zwischen der lumineszierenden Schicht und dem die fotoempfindlichen Elemente tragenden Substrat eine optische Filterschicht befinden.

In Ausgestaltung der Erfindung ist vorgesehen, daß die Kopplungsschicht eine Beugungsstruktur, beispielsweise eine periodische Gitterstruktur aufweist, welche die Anregungsstrahlung in die über den fotoempfindlichen Elementen liegenden Bereiche der Indikatorschicht lenkt. Die Beugungsstruktur in der Kopplungsschicht wird dabei als fokussierendes optisches Element für die Anregungsstrahlung verwendet, wobei die geringe Bauhöhe dieser Gitterstrukturen (holographische Struktur) vorteilhaft ist. Um die holographischen Strukturen, welche in einer Dicke von 0,3 $\mu$m herstellbar sind, optimal auszunutzen, sollte möglichst paralleles Licht geringer spektraler Bandbreite verwendet werden. Die Wirksamkeit dieser Struktur ist jedoch auch mit Divergenzen von einigen 5 bis 10° und einer spektralen Bandbreite von einigen 5 bis 10 nm gewährleistet.

Zur besseren Unterscheidung des Anregungslichtes vom Fluoreszenzlicht oder zur Auswertung bezüglich mehrerer unterschiedlicher Wellenlängen, ist es in einer Weiterbildung der Erfindung möglich,daß die fotoempfindlichen Elemente und/oder die lichtemittierenden Quellen zusätzlich von einer optischen Filterschicht, vorzugsweise von einem optischen Interferenzfilter, überzogen sind. Bei geeigneter Wahl des Fluoreszenzindikators, bzw. im Fall einer diffusen Reflexionsmessung, ist es unter Umständen nicht erforderlich, daß beide fotoelektrischen Elemente jeweils eine Filterschicht tragen.

Eine weitere Ausgestaltung der Erfindung nutzt die Winkelabhängigkeit der spektralen Durchlässigkeit von Interferenzfiltern, wobei sich zwischen der Kopplungsschicht und der Indikatorschicht ein Interferenzfilter befindet, welches für bestimmte Einfallswinkel unterschiedliche Transmissionskoeffizienten für die Anregungsstrahlung und die von der Indikatorsubstanz emittierte Fluoreszenzstrahlung aufweist. Es ist bekannt, daß bei Interferenzfiltern der Durchlässigkeitsbereich zu kürzeren Wellenlängen verschoben wird, sofern die einfallende Strahlung nicht im rechten Winkel zur Filteroberfläche auftrifft. Dadurch kann die winkelabhängige spektrale Verschiebung der Durchlässigkeit von Interferenzfiltern zur Unterscheidung von kurzwelligem Anregungslicht und längerwelligem Fluoreszenzlicht herangezogen werden. Kurzwelliges Anregungslicht kann dabei die Filterschicht nur durchdringen, wenn der Einfallswinkel $\alpha$ größer als ein bestimmter Grenzwinkel, beispielsweise 30°, ist. Längerwelliges Fluoreszenzlicht durchdringt die Filterschicht nur, wenn der Einfallswinkel $\beta$ kleiner als ein bestimmter Grenzwinkel, beispielsweise 25°, ist. Die relative Lage der fotoempfindlichen Elemente bzw. der lichtemittierenden Quellen in Bezug auf die Indikatorschicht kann aufgrund dieser optischen Gegebenheiten dahingehend optimiert werden, daß die Signalausbeute am größten wird.

Falls von den lichtemittierenden Quellen, beispielsweise den LEDs längerwelliges (spektral dem Fluoreszenzlicht entsprechendes) Licht emittiert wird,sollen dafür entsprechende Winkelbedingungen gelten,welche verhindern, daß längerwelliges von den LEDs abgestrahltes Licht oder dessen Streulicht zum fotoempfindlichen Element, beispielsweise zum Fototransistor, gelangt.

Falls gleichzeitig mehrere Stoffkonzentrationen in gasförmigen oder flüssigen Proben bestimmt werden sollen,kann in einer Weiterbildung der Erfindung vorgesehen sein,daß in der Indikatorschicht einzelnen,fotoempfindlichen Elementen zugeordnete Mikrozonen vorliegen,die unterschiedliche Indikatorsubstanzen aufweisen. Somit können mit einem Sensorelement mit beliebiger topographischer Anordnung von lichtemittierenden und fotoempfindlichen Bauelementen,mehrere unterschiedliche Stoffe aus der gleichen Probe gleichzeitig gemessen werden.

Dabei ist es nach einer vorteilhaften Weiterbildung der Erfindung möglich, daß die Indikatorschicht aus einer porösen Glasschicht besteht,in welcher die Indikatorsubstanz immobilisiert ist.

Zur Herstellung eines pH-Sensors wird beispielsweise mikroporöses Glas verwendet, welches aufgesputtert wird. Darauf wird chemisch der Farbstoff immobilisiert und gegebenenfalls eine proteinimpermeable Schicht, z.B. aus PVA, aufgedampft. Es ist jedoch in einer anderen Weiterbildung der Erfindung auch möglich, daß die Indikatorschicht aus beispielsweise aufgespinntem oder aufgewalztem Silikon besteht,in welchem die Indikatorsubstanz vorliegt.

In einer besonderen Ausführungsform der Erfindung ist vorgesehen,daß die Indikatormoleküle der Indikatorsubstanz an der optischen Kopplungsschicht direkt chemisch gebunden vorliegen. Sollte das Material,aus dem die optische Kopplungsschicht besteht,für direkte Immobilisierung nicht geeignet sein,kann eine darüberliegende Schicht aus anderem Material,z.B. einem geeigneten Glas,aufgebracht werden,an der eine chemische Immobilisierung von Indkatormolekülen wiederum möglich ist.

Zur Aufbringung unterschiedlicher Indikatorsubstanzen in nur einige 100 Mikrometer Durchmesser aufweisende Bereiche der Indikatorschicht ist es möglich, die Indikatorsubstanzen mittels Mikrosiebdruck oder durch Aufdampfen aufzubringen. Dabei werden auf bestimmte Zonen, welche durch eine im Fotoverfahren hergestellte Maske definiert sind, dünne Stoffschichten in Form von Mikrosiebdruck und ähnlichen Verfahren abgeschieden.

Es ist auch möglich, daß die Indikatorschicht auf der der Probe zugewandten Seite eine Deckschicht aufweist. Im einfachsten Fall kann diese Deckschicht aus einer dünnen Polymerschicht mit einem eingebrachten Pigment bestehen und dafür sorgen, daß das Anregungslicht und das Fluoreszenzlicht nicht in den Probenraum gelangen können, um dort allenfalls unerwünschte Reflexionen oder Fluoreszenzen von Substanzen anzuregen, die als Interferenz sodann mitgemessen werden würden. Auch Unterschiede im Brechungsindex unterschiedlicher Probenmaterialien spielen durch die Anbringung einer Deckschicht keine Rolle. Überdies können durch eine geeignete Deckschicht grob molekulare Bestandteile der Probe, die das Meßergebnis beeinflussen würden, von der Indikatorschicht ferngehalten werden. Es ist auch möglich, eine Deckschicht mit einer selektivierenden Wirkung anzubringen, wodurch die zu messenden Stoffe bevorzugt zur Indikatorschicht durchdiffundieren können. Für jene Ausführungsformen, wo die Kopplungsschicht als Lichtleiter fungiert, ist es auch möglich, eine Deckschicht mit entsprechendem Brechungsindex zu wählen, sodaß die Deckschicht die Aufgabe der der Probe zugewandten Grenzschicht übernimmt.

Bei Sensorelementen, wo nicht die Fluoreszenz, sondern die Absorption bzw. diffuse Reflexion des Indikators ausgenützt wird, ist es in der Regel erforderlich, die Grenzschichte der Indikatorschicht zur Probe mit einem reflektierenden Material und eventuell zusätzlich mit einer optischen Deckschicht zu versehen.

Ein weiterer Vorteil derartiger planarer Mikrosensoren besteht, neben der bereits erwähnten Massenfertigungsmöglichkeit durch mikroelektronische Techniken, darin, daß auf der Trägerschicht und allfälligen weiteren mit dieser verbundenen Substraten elektronische Schaltkreise mitintegriert sind, welche zur Regelung der Helligkeit der von den lichtemittierenden Quellen erzeugten Strahlung und/oder zur Verstärkung der elektrischen Signale der fotoempfindlichen Elemente dienen. Ein weiterer Schritt zu noch höherer Integration ist schließlich erfindungsgemäß dadurch gegeben, daß auf der Trägerschicht hoch integrierte, elektronische Schaltkreise vorhanden sind, welche Aufgaben der Signalauswertung übernehmen. So kann z.B. durch Aufsputtern unterschiedlich gefärbter Gläser auf lichtempfindliche Elemente einzelner Mikrozonen und Berücksichtigung dieses Farbmusters bzw. der unterschiedlich durchlässigen Filter im mikroelektronischen Schaltbild, wobei der Farbe I der Schaltkreis I bzw. der Farbe II der Schaltkreis II etc. zugeordnet wird, eine Mehrwellenlängenanalyse direkt im Sensorelement ermöglicht werden.

Ebenso ist es möglich, einen Teil der fotoempfindlichen Elemente mit den gleichen Filtermaterialien auszustatten, mit welchem die lichtemittierenden Quellen bedeckt sind. In diesem Fall wird gestreutes oder reflektiertes Anregungslicht detektiert, sodaß ein Referenzwert der Lichtintensität zur Verfügung steht.

Die Erfindung wird im folgenden anhand von Zeichnungen näher erläutert. Es zeigen:

Figur 1 einen Schnitt durch ein Sensorelement nach der Erfindung in schematischer Darstellung,

Figur 2 eine Variante des Sensorelementes nach Figur 1 in gleicher Schnittdarstellung, die

Figuren 3 und 4 andere Ausführungsformen des Sensorelementes ebenfalls in gleicher Schnittdarstellung wie Figur 1, die

Figur 5 einen Schnitt entlang der Linie V-V in Figur 6 durch ein Sensorelement nach einer weiteren Ausführungsvariante,

Figur 6 das Sensorelement nach Figur 5 parallel zu dessen Oberfläche geschnitten entlang der Linie VI-VI in Figur 5,

Figuren 7 bis 9 andere Ausführungsformen des Sensorelementes in gleicher Schnittdarstellung wie Figur 5, sowie

Figuren 10 und 11 Sensorelemente mit unterschiedlicher topographischer Anordnung der fotoelektrischen Elemente.

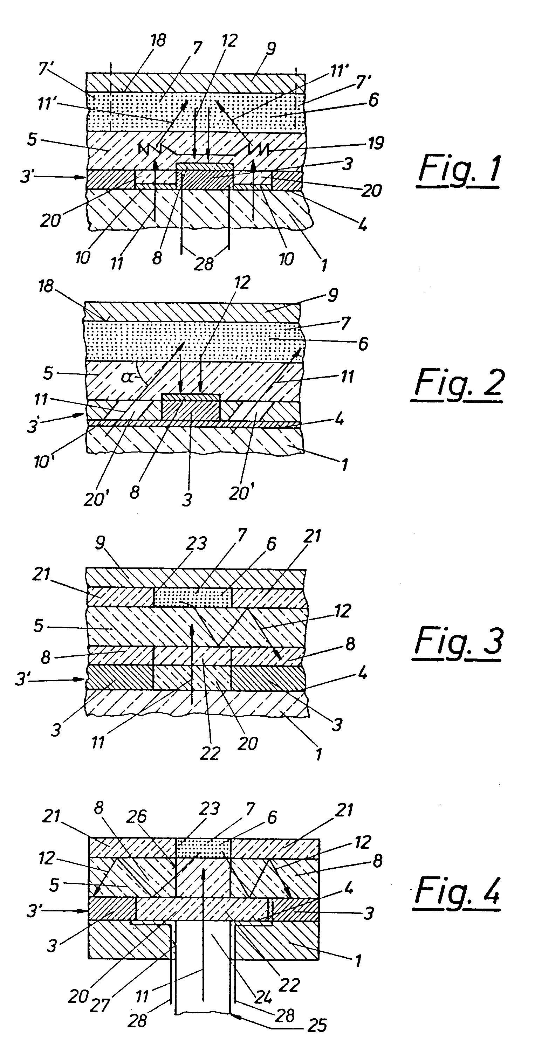

Das in Figur 1 dargestellte erfindungsgemäße Sensorelement weist auf einer geeigneten Trägerschicht 1 in einem als Dünnschicht ausgeführten Substrat 3' fotoempfindliche Elemente 3 auf, welche darin parallel zur Oberfläche 4 der Trägerschicht 1 in planarer Anordnung integriert sind. Die fotoempfindlichen Elemente 3 sind von einer optisch durchlässigen Kopplungsschicht 5, beispielsweise aus $SiO_2$ bedeckt, welche durch geeignete mikroelektronische Techniken aufgebracht wird. Es ist jedoch auch möglich, die fotoempfindlichen Elemente 3 direkt auf die Trägerschicht 1 aufzubringen, wobei sich dann die Kopplungsschicht 5 auch auf die Bereiche zwischen den fotoempfindlichen Elementen 3 erstreckt. Auf dieser Kopplungsschicht 5 befindet sich die Indikatorschicht 6 mit der Indikatorsubstanz 7. Das Substrat 3' weist Bereiche 20 auf, welche für die Anregungsstrahlung 11 durchlässig sind, wobei die Anregungsstrahlung 11 über die dafür transparente Trägerschicht 1 - beispielsweise mittels hier nicht dargestellter Lichtleiter - zugeführt wird. Um die für die Anregung der Indikatorsubstanz 7 gewünschte Wellenlänge zu erzielen, weisen die durchlässigen Bereiche 20 eine Filterschicht 10 auf. Nach dem Passieren dieser Filterschicht trifft die Anregungsstrahlung 11 auf eine in der Kopplungsschicht 5 vorliegende Beugungsstruktur 19, beispielsweise eine holographische Gitterstruktur (Blaze) wodurch die davon abgelenkte Anregungsstrahlung 11' in die über den fotoempfindlichen Elementen 3 liegenden Bereiche der Indikatorschicht 6 fokusiert wird. Die elektrische Kontaktierung der fotoempfindlichen Elemente 3, welche mit einem optischen Filtermaterial 8 bedeckt sind, ist in den einzelnen Figuren nicht im Detail dargestellt, da sie mit Hilfe an sich bekannter mikroelektronischer Techniken auf der Trägerschicht 1 bzw. im Substrat 3' intergriert ist, lediglich die das Sensorelement durch die Trägerschicht 1 verlassenden elektrischen Kontaktstifte bzw. -drähte 28 sind aus Figur 1 und der noch zu beschreibenden Figur 4 ersichtlich, wobei jedoch im Rahmen der Erfindung die Kontaktstifte bzw. -drähte auch an anderen Stellen des Sensorelementes angebracht sein können.

Um das Austreten von Anregungsstrahlung 11 aus dem Sensorelement - was zu unerwünschten Reflexionen oder Fluoreszenzen in der anliegenden Probe führen könnte - zu verhindern, trägt die Indikatorschicht an ihrer der Probe zugewandten Seite 18 eine optische Deckschicht 9, sodaß nur Fluoreszenzstrahlung 12 bzw. Reflexionsstrahlung aus der Sensorschicht 6 detektiert wird. Es ist natürlich auch möglich, in einzelnen jeweils be-stimmten fotoempfindlichen Elementen 3 zugeord-neten Bereichen der Sensorschicht 6 unterschiedliche Indikatorsubstanzen 7, 7' vorzusehen.

In allen übrigen Ausführungsbeispielen sind gleiche Teile mit gleichen Bezugszeichen versehen.

In der in Figur 2 dargestellten Ausführungsvariante werden durch ein anderes Konzept die günsti-gen Anregungs- und Detektionsverhältnisse reali-siert. Die durch die transparente Trägerschicht 1 herangeführte Anregungsstrahlung 11 wird durch schräg angeordnete durchlässige Bereiche 20' im Substrat 3' direkt in die über den fotoempfindlichen Elementen 3 liegenden Bereiche der Indikatorschicht 6 geleitet. Der Winkel zwischen Anregungsstrahlung 11 und Indikatorschicht 6 ist von der topographischen Anordnung der fotoempfindlichen Elemente und der durchlässigen Bereiche sowie von der Dicke der einzelnen Schichten, insbesondere der Kopplungsschicht 5, abhängig, und beträgt in dem in Figur 2 dargestellten Ausführungs-beispiel ca. 45°. Zwischen der Trägerschicht 1 und dem Substrat 3' befindet sich eine optische Filterschicht 10', um die für die Anregung der Indikatorsubstanz 7 günstigste Wellenlänge auszufiltern. Die schrägen Löcher bzw. durchlässigen Bereiche 20' im Substrat 3', können durch geeignete Techniken, beispielsweise durch Einbringen von Perforationen mittels Lasertechnik, hergestellt werden.

In Fig. 3 ist ein Sensorelement dargestellt, bei welchem auf einer transparenten Trägerschicht 1 ein als Diodenschicht ausgebildetes Substrat 3' aufgebracht ist. In die Diodenschicht werden durch Ätzen durchlässige Bereiche 20 für die Anregungsstrahlung 11 geschaffen, welche weiters in die über den durchlässigen Bereichen liegende Indikatorschicht 6 mit der Indikatorsubstanz 7 gelangt. Die über der Diodenschicht liegende Kopplungsschicht 5, welche einen Brechungsindex $n_2$ aufweist, wird

von beiderseits vorliegenden Grenzschichten 21, 22, welche einen Brechungsindex $n_1$ aufweisen, begrenzt, sodaß die Kopplungsschicht 5 zusammen mit den Grenzschichten 21, 22 einen planaren Lichtleiter für die zu messende Strahlung 12 bildet. In der der Probe zugewandten Grenzschicht 21 werden durch Ätzen Aussparungen 23 hergestellt, in welche die Sensorschicht 6 eingebracht wird. Die auf der der Probe abgewandten Seite angebrachte Deckschicht 22 wird im Bereich der fotoempfindlichen Elemente 3 (Fotodioden) durch eine Filterschicht 8 ersetzt, welche einen, die Totalrefle-xion der Anregungsstrahlung aufhebenden Bre-chungsindex $n_3$ aufweist ($n_3$ annähernd gleich $n_2$). Die normal auf die Grenzschicht 22 auftreffende Anregungsstrahlung 11 passiert die Kopplungsschicht 5 und gelangt in die Sensorschicht 6, wo die Indikatorsubstanz 7 angeregt wird. Die nach allen Richtungen emittierte Fluoreszenzstrahlung 12 wird zum Teil an den Grenzschichten 21, 22 totalreflektiert und tritt an den die Totalreflexion aufhebenden Bereichen der Filter 8 in die fotoempfindlichen Elemente 3 ein. Es ist natürlich auch möglich, diesen Sensor mit einer Deckschicht 9 zur Probe hin abzudecken.

Die in Fig. 4 dargestellte Ausführungsform stellt eine Variante der Ausführungsform nach Fig. 3 dar. Ausgangsprodukt für diesen Sensor ist ein Wafer (Trägerschicht 1 mit Substrat 3'), der alle Schichten einer Fotodiode trägt, welche hier mit 3' bezeichnet sind. Daraus wird im ersten Schritt durch Ätzen ein ringförmiges, fotoempfindliches Element 3 hergestellt, und beispielsweise durch Sputtern die zentrale Kreisfläche mit Glas mit Bre-chungsindex $n_1$ homogen aufgefüllt, wodurch der für die Anregungsstrahlung 11 durchlässige Bereich 20 hergestellt wird. Darüber kommt im nächsten Schritt eine die Kopplungsschicht 5 realisierende Schicht aus beispielsweise aufgesputtertem Farbglasfilter oder aufgespinntem Kunststofffilter mit einem Brechungsindex $n_2$. In diesem Fall wirkt somit die Kopplungsschicht 5 einerseits als Lichtleiter für die zu messende Strahlung 12 und andererseits als selektive Filterschicht 8, welche die Fluoreszenzstrahlung von der reflektierten oder gestreuten Anregungsstrahlung trennt. Aus der Filterschicht 8 wird nun eine über dem durchlässigen Bereich 20 liegende Öffnung 26 herausgeätzt, die mit einem für die Anregungsstrahlung 11 durchlässigen Glas aufgefüllt wird. Schließlich wird die der Probe zugewandte Grenzschicht 21, welche einen Brechungsindex $n_1$ aufweist, aufgesputtert oder aufgespinnt und in die zur Öffnung 26 konzentrisch liegende Aussparung 23 die Indikatorschicht 6 eingebracht. Als Indikatorschicht 6 wird entweder eine poröse Glasschicht verwendet, in welcher die Indikatorsubstanz 7 immobilisiert wird, oder eine indikatorhältige Siliconschicht, die in die scheibenförmige Aussparung 23 eingewalzt wird. Von Vorteil ist es, wenn die Indikatorschicht 6 einen ähnlichen Brechungsindex aufweist, wie die Kopplungsschicht 5.

Schließlich wird als letzter Schritt in der Trägerschicht 1 eine zentrale Bohrung 27 hergestellt, welche bis zu der den durchlässigen Bereich 20 füllenden Grenzschicht 22 reicht und das Ende 24 eines Lichtleiters 25 aufnimmt. Dabei kommen bevorzugt Single-Fibre-Lichtleiter zur Anwendung. Die Kontaktdrähte 28 treten hier parallel zum Lichtleiter 25 aus und können daran entsprechend befestigt ein optoelektrisches Faserbündel bilden.

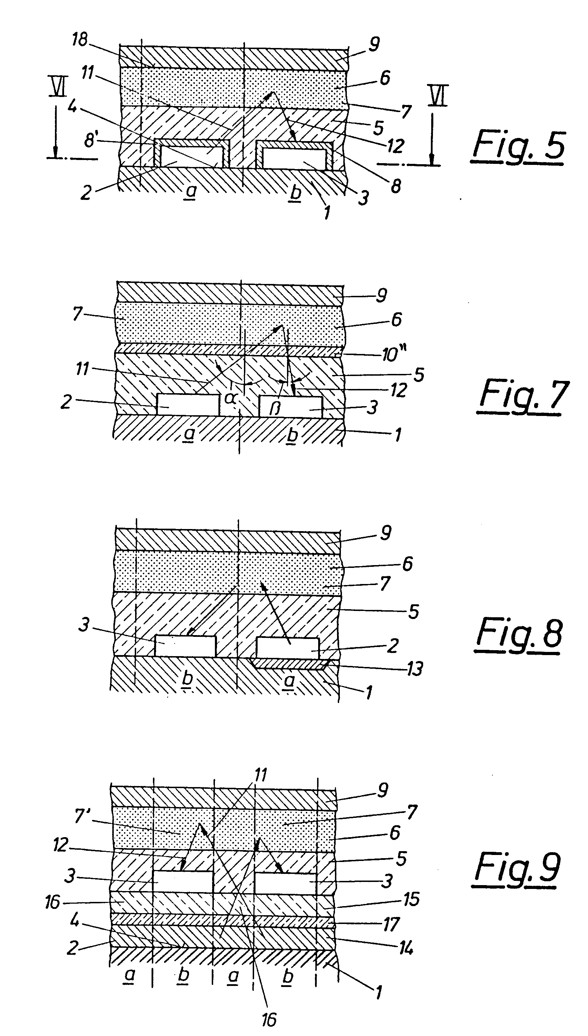

Das in Fig. 5 dargestellte erfindungsgemäße Sensorelement weist auf einer geeigneten Trägerschicht 1, welche man sich beispielsweise in schachbrettartige Mikrozonen a, b unterteilt vorstellen kann, abwechselnd in den Mikrozonen a lichtemittierende Quellen 2 und b fotoempfindliche Elemente 3 auf, welche parallel zur Oberfläche 4 der Trägerschicht 1 in planarer Anordnung integriert sind. Die anhand dieses Ausführungsbeispiels beschriebene topografische Anordnung der Mikrozonen a, b ist in Fig. 6 dargestellt, wobei die Kantenlänge der einzelnen Mikrozonen im Bereich von wenigen Mikrometern liegt. Die fotoelektrischen Elemente 2, 3 sind von einer optisch durchlässigen Kopplungsschicht 5, beispielsweise aus $SiO_2$ bedeckt. Um die für die Anregung der Indikatorsubstanz 7 gewünschte Wellenlänge zu erzielen, können die lichtemittierenden Quellen 2, realisiert durch lichtemittierende Dioden oder elektrolumineszierende Schichten, mit optischem Filtermaterial 8' überzogen sein, wobei es natürlich auch möglich ist, zur Auswahl einer bestimmten Wellenlänge aus dem Fluoreszenzspektrum die fotoempfindlichen Elemente 3, beispielsweise Fototransistoren, mit einem optischen Filtermaterial 8 zu bedecken. Die elektrischen Zuleitungen zu den lichtemittierenden Quellen 2 bzw. die Signalableitungen von den fotoempfindlichen Elementen 3, sind auch hier nicht dargestellt.

Die in Abbildung 7 dargestellte Ausführungsform zeigt, daß die winkelabhängige, spektrale Verschiebung der Durchlässigkeit eines Interferenzfilters 10'', angeordnet zwischen der Kopplungsschicht 5 und der Indikatorschicht 6 zur Unterscheidung von kurzwelliger Anregungsstrahlung 11 und längerwelliger Fluoreszenzstrahlung 12 herangezogen werden kann. Die lichtemittierenden Quellen 2 und die fotoempfindlichen Elemente 3 sind wie auch in Fig. 5 in einer Ebene angeordnet. Die geometrische Anordnung der fotoelektrischen Elemente 2, 3 zueinander bzw. im Bezug auf das Interferenzfilter 10 und die darüberliegende Indikatorschicht 6 sorgt für folgende Verhältnisse: Kurzwellige Anregungsstrahlung 11 kann das Interferenzfilter 10'' nur durchdringen, wenn der Einfallswinkel $\alpha$, gemessen zur Normale auf das Interferenzfilter, größer als ein bestimmter Grenzwinkel, beispielsweise 30° ist. Längerwellige Fluoreszenzstrahlung 12 durchdringt das Interferenzfilter 10'' nur, wenn der Einfallswinkel $\beta$ kleiner als ein bestimmter Grenzwinkel, beispielsweise 25° ist. Diese vorteilhafte Anbringung eines Interferenzfilters kann selbstverständlich auch dan getroffen werden, wenn die lichtemittierenden Quellen und die fotoempfindlichen Elemente nicht in einer Ebene angeordnet sind.

Falls die lichtemittierenden Quellen 2 und die fotoempfindlichen Elemente 3 nicht auf derselben Trägerschicht 1 integriert werden können, ist es möglich, wie in Fig. 8 dargestellt, auf der Trägerschicht 1 in den dafür vorgesehenen Mikrozonen b zuerst eine Sorte der fotoelektrischen Bauteile aufzubringen, beispielsweise die fotoempfindlichen Elemente 3 und in jenen Mikrozonen a, wo die lichtemittierenden Quellen integriert werden, vorher ein anderes Substrat 13 (Co-Substrat) auf die Trägerschicht aufzubringen. Es ist natürlich auch möglich, für die fotoempfindlichen Elemente 3 ein eigenes Co-Substrat vorzusehen, oder auch unterschiedliche Substrate für jede Sorte der fotoelektrischen Elemente 2, 3 zu verwenden.

In der in Fig. 9 dargestellten Ausführungsvariante sind die lichtemittierenden Quellen 2 und die fotoempfindlichen Elemente 3 nicht in einer Ebene angeordnet. Die auf der Trägerschicht 1 in Mikrozonen a integrierten lichtemittierenden Quellen 2 können dabei, wie im vorliegenden Ausführungsbeispiel dargestellt, eine zusammenhängende, lumineszierende Schicht 14 bilden, wobei sich in diesem Fall die Mikrozonen a, b zumindest teilweise überlappen. Die lumineszierende Schicht 14 wird, gegebenenfalls unter Zwischenlage einer Filterschicht 17, von einem Substrat 15 bedeckt, auf welchem in Mikrozonen b die fotoempfindlichen Elemente 3 integriert sind. Darüber befinden sich die Kopplungsschicht 5 und die Indikatorschicht 6, welche gegebenenfalls von einer Deckschicht 9 abgedeckt ist. Das die fotoempfindlichen Elemente 3 tragende Substrat 15 ist entweder für die Anregungsstrahlung 11 durchlässig, oder weist zumindest Bereiche 16 auf, wo diese Durchlässigkeit durch Ätzen von Löchern oder durch Einbringen von Perforationen mit Lasertechnik hergestellt werden kann. Es ist natürlich auch hier möglich, wie bereits in Fig. 5 dargestellt, die fotoempfindlichen Elemente und die lichtemittierenden Quellen mit unterschiedlichem Filtermaterial zu überziehen, oder einzelne fotoempfindliche Elemente 3 mit jeweils unterschiedlichem Filtermaterial zu bedecken, um so eine Auswertung der Fluoreszentstrahlung 12 nach mehreren unterschiedlichen Wellenlängen vorzunehmen. Einzelne, den fotoempfindlichen Elementen 3 zugeordnete Mikrozonen b der Sensorschicht 6, können natürlich auch unterschiedliche Indikatorsubstanzen 7, 7' aufweisen, wodurch mit Hilfe eines Sensorelementes die Konzentration mehrerer in der Probe vorliegender Stoffe gleichzeitig bestimmt werden kann.

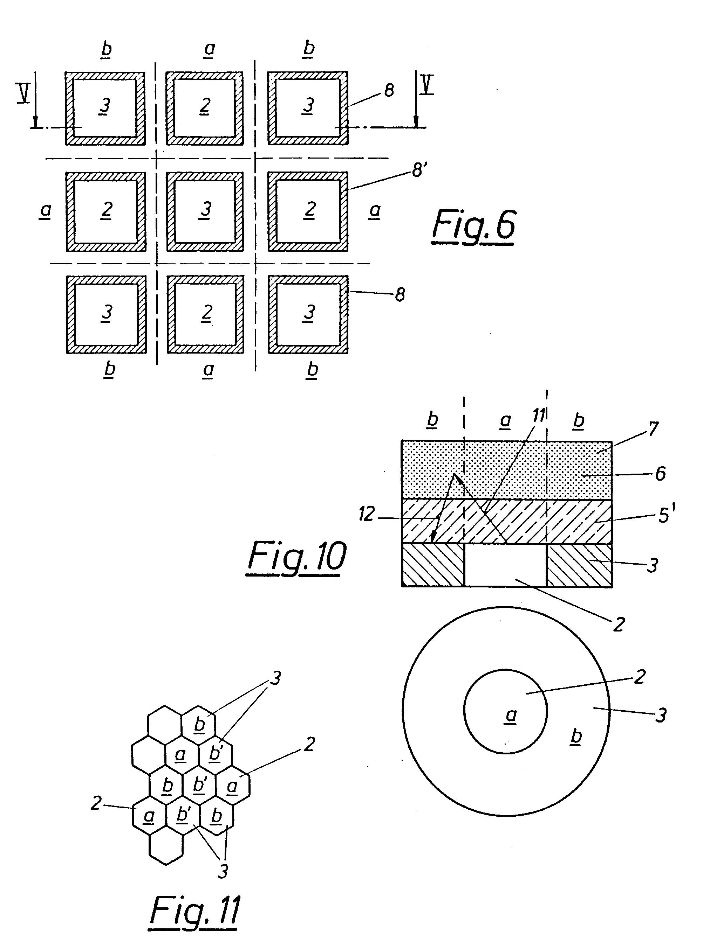

Bei der in Fig. 10 gezeigten Anordnung bilden die lichtemittierende Quelle 2 und das fotoempfindliche Element 3 eine integrale Einheit, welche eine kreisringförmige Struktur aufweist. Dabei kann z.B. eine Fotodiode in der kreisförmigen Mikrozone a von einem Fototransistor in der kreisringförmigen Mikrozone b umgeben sein. Mehrere solche integrale Einheiten können zu einem Sensorelement zusammengefaßt sein.

Schließlich ist in Fig. 11 eine weitere topografische Anordnung der Mikrozonen dargestellt, welche hier eine sechseckige Wabenstruktur aufweisen. Dabei ist beispielsweise eine lichtemittierende Quelle 2 von mehreren fotoempfindlichen Elementen 3 äquidistant umgeben. Durch diese vorteilhafte Anordnung kann durch Aufbringen unterschiedlicher Filtermaterialien in den Mikrozonen b, b' auf einfache Weise eine Mehrwellenlängenanalyse durchgeführt werden.

**Patentansprüche**

1. Sensorelement zur Bestimmung von Stoffkonzentrationen in gasförmigen und flüssigen Proben, mit einer Trägerschicht, sowie einer Indikatorschicht mit mindestens einer Indikatorsubstanz, wobei sich mindestens eine optische Eigenschaft der Indikatorsubstanz bei Wechselwirkung mit dem zu messenden Stoff abhängig von dessen Konzentration ändert, **dadurch gekennzeichnet**, daß auf der Trägerschicht (1) ein Substrat (3') angeordnet ist, in welches mindestens ein fotoempfindliches Element (3) und dessen elektrische Kontaktierung in planarer Anordnung integriert sind, daß das Substrat (3') mindestens einen Bereich (20; 20') aufweist, der für die Anregungsstrahlung (11) durchlässig ist sowie daß die von der Anregungsstrahlung (11) angeregte Indikatorsubstanz (7, 7') der Indikatorschicht (6) über eine für die Anregungsstrahlung (11) und die zu messende Strahlung (12) durchlässige Kopplungsschicht (5) mit den fotoempfindlichen Elementen (3) in optischem Kontakt steht.

2. Sensorelement nach Anspruch 1, **dadurch gekennzeichnet**, daß die einen Brechungsindex $n_2$ aufweisende Kopplungsschicht (5) zusammen mit beiderseits der Kopplungsschicht liegenden Grenzschichten (21, 22) mit einem Brechungsindex $n_1$ einen planaren Lichtleiter für die zu messende Strahlung (12) bildet, wobei $n_2 > n_1$ gilt, daß die der Probe zugewandte Grenzschicht (21) mindestens eine Aussparung (23) aufweist, welche die Indikatorschicht (6) aufnimmt, daß jede Aussparung (23) - in Richtung der Anregungsstrahlung (11) gesehen - über einem für die Anregungsstrahlung (11) durchlässigen Bereich (20) liegt, sowie daß die Totalreflexion der zu messenden Strahlung (12) im Bereich der fotoempfindlichen Elemente (3) aufgehoben ist.

3. Sensorelement nach Anspruch 1 oder 2, **dadurch gekennzeichnet**, daß nur ein für die Anregungsstrahlung (11) durchlässiger Bereich (20) vorliegt und das fotoempfindliche Element (3), beispielsweise eine Fotodiode, eine dazu konzentrische, kreisringförmige Struktur aufweist.

4. Sensorelement nach Anspruch 1, **dadurch gekennzeichnet**, daß im Substrat (3') durchlässige Bereiche (20') schräg angeordnet sind, sodaß die Anregungsstrahlung (11), vorzugsweise mit einem Winkel $\alpha$ zwischen 40 und 60° auf die Indikatorschicht (6) auftrifft und die über den fotoempfindlichen Elementen (3) liegenden Bereiche der Indikatorschicht (6) anregt.

5. Sensorelement nach einem der Ansprüche 1 bis 3, **dadurch gekennzeichnet**, daß in den für die Anregungsstrahlung (11) durchlässigen Bereichen (20) das Ende (24) eines Lichtleiters (25), insbesondere einer Single-Fibre, endet.

6. Sensorelement nach einem der Ansprüche 1 bis 5, **dadurch gekennzeichnet**, daß in den für die Anregungsstrahlung (11) durchlässigen Bereichen (20; 20') eine Filterschicht (10; 10'), insbesondere ein optisches Interferenzfilter, vorliegt.

7. Sensorelement zur Bestimmung von Stoffkonzentrationen in gasförmigen und flüssigen Proben, mit einer Trägerschicht, sowie einer Indikatorschicht mit mindestens einer Indikatorsubstanz, wobei sich mindestens eine optische Eigenschaft der Indikatorsubstanz bei Wechselwirkung mit dem zu messenden Stoff abhängig von dessen Konzentration ändert, **dadurch gekennzeichnet**, daß auf der Trägerschicht (1) in Mikrozonen (b, b') vorliegende fotoempfindliche Elemente (3), sowie in benachbarten Mikrozonen (a) angeordnete lichtemittierende Quellen (2), zusammen mit deren elektrischen Zu- und Ableitungen in planarer Anordnung integriert sind, sowie daß die von der Anregungsstrahlung (11) der lichtemittierenden Quellen (2) angeregte Indikatorsubstanz (7, 7') der Indikatorschicht (6) mit den fotoempfindlichen Elementen (3) in optischem Kontakt steht, wobei die fotoempfindlichen Elemente (3) in Richtung der Anregungsstrahlung (11) vor oder neben den lichtemittierenden Quellen (2) liegen.

8. Sensorelement nach Anspruch 7, **dadurch gekennzeichnet**, daß sich zwischen den lichtemittierenden Quellen (2) und/oder den fotoempfindlichen Elementen (3) einerseits und der Indikatorschicht (6) andererseits eine optisch durchlässige Kopplungsschicht (5) befindet.

9. Sensorelement nach Anspruch 7 oder 8, **dadurch gekennzeichnet**, daß die die lichtemittierenden Quellen (2) bildenden Halbleiterstrukturen und ggf. ihre elektrische Kontaktierung auf einem eigenen Substrat (13) integriert sind, welches Substrat (13) in jenen Mikrozonen (a) der Trägerschicht (1) aufgebracht ist, die von lichtemittierenden Quellen (2) besetzt sind.

10. Sensorelement nach einem der Ansprüche 7 bis 9, **dadurch gekennzeichnet**, daß die Mikrozonen (a, b) auf der Trägerschicht (1) schachbrettartig angeordnet sind, wobei die Mikrozonen (a, b) abwechselnd von einer lichtemittierenden Quelle (2) und einem fotoempfindlichen Element (3) besetzt sind.

11. Sensorelement nach einem der Ansprüche 7 bis 9, **dadurch gekennzeichnet**, daß die Mikrozonen (a, b, b') auf der Trägerschicht (1) wabenförmig angeordnet sind, wobei jeweils einer lichtemittierenden Quelle (2) zumindest zwei äquidistante, mit unterschiedlichem Filtermaterial versehene, fotoempfindliche Elemente (3) zugeordnet sind.

12. Sensorelement nach einem der Ansprüche 7 bis 9, **dadurch gekennzeichnet**, daß die lichtemittierenden Quellen (2) vorzugsweise LEDs, jeweils von einem fotoempfindlichen Element (3) kreisringförmiger Struktur, vorzugsweise von einer Fotodiode oder einem Fototransistor, umgeben sind.

13. Sensorelement nach Anspruch 7 oder 8, **dadurch gekennzeichnet**, daß die lichtemittierenden Quellen (2) einerseits und die fotoempfindlichen Elemente (3) andererseits in zueinander parallelen Ebenen vorliegen, wobei die lichtemittierenden Quellen (2) vorzugsweise eine zusammenhängende, lumineszierende Schicht (14) bilden, welche auf der Trägerschicht (1) aufgebracht ist, sowie daß die die fotoempfindlichen Elemente (3) bildenden Halbleiterstrukturen auf einem die lumineszierende Schicht (14) bedeckenden Substrat (15) integriert sind und daß das Substrat (15) Bereiche (16) aufweist, die einen optischen Kontakt der lumineszierenden Schicht (14) mit der Indikatorschicht (6) ermöglichen.

14. Sensorelement nach Anspruch 13, **dadurch gekennzeichnet**, daß sich zwischen der lumineszierenden Schicht (14) und dem die fotoempfindlichen Elemente (3) tragenden Substrat (15) eine optische Filterschicht (17) befindet.

15. Sensorelement nach Anspruch 1 oder 8, **dadurch gekennzeichnet**, daß die Kopplungsschicht (5) eine Beugungsstruktur (19), beispielsweise eine periodische Gitterstruktur aufweist, welche die Anregungsstrahlung (11) in die über den fotoempfindlichen Elementen (3) liegenden Bereiche der Indikatorschicht (6) lenkt.

16. Sensorelement nach einem der Ansprüche 1 bis 15, **dadurch gekennzeichnet**, daß die fotoempfindlichen Elemente (3) und/oder die lichtemittierenden Quellen (2) zusätzlich von einer optischen Filterschicht (8, 8'), vorzugsweise von einem optischen Interferenzfilter, überzogen sind.

17. Sensorelement nach einem der Ansprüche 1 bis 15, **dadurch gekennzeichnet**, daß sich zwischen der Kopplungsschicht (5) und der Indikatorschicht (6) ein Interferenzfilter (10'') befindet, welches für bestimmte Einfallswinkel ($\alpha$, $\beta$) unterschiedliche Transmissionskoeffizienten für die Anregungsstrahlung (11) und die von der Indikatorsubstanz (7, 7') emittierte Fluoreszenzstrahlung (12) aufweist.

18. Sensorelement nach einem der Ansprüche 1 bis 17, **dadurch gekennzeichnet**, daß in der Indikatorschicht (6) einzelnen fotoempfindlichen Elementen (3) zugeordnete Mikrozonen (b, b') vorliegen, die unterschiedliche Indikatorsubstanzen (7, 7') aufweisen.

19. Sensorelement nach einem der Ansprüche 1 bis 18, **dadurch gekennzeichnet**, daß die Indikatorschicht (6) aus einer porösen Glasschicht besteht, in welcher die Indikatorsubstanz (7, 7') immobilisiert ist.

20. Sensorelement nach einem der Ansprüche 1 bis 18, **dadurch gekennzeichnet**, daß die Indikatorschicht (6) aus beispielsweise aufgespinntem oder aufgewalztem Silicon besteht, in welchem die Indikatorsubstanz (7, 7') vorliegt.

21. Sensorelement nach einem der Ansprüche 1 bis 18, **dadurch gekennzeichnet**, daß die Indikatormoleküle der Indikatorsubstanz (7, 7') an der optischen Kopplungsschicht (5) direkt chemisch gebunden vorliegen.

22. Sensorelement nach einem der Ansprüche 1 bis 18, **dadurch gekennzeichnet**, daß die Indikatorsubstanzen (7, 7') mittels Mikrosiebdruck oder durch Aufdampfen aufbringbar sind.

23. Sensorelement nach einem der Ansprüche 1 bis 22, **dadurch gekennzeichnet**, daß auf der Trägerschicht (1) und allfälligen weiteren mit dieser verbundenen Substraten (13, 15) elektronische Schaltkreise mitintegriert sind, welche zur Regelung der Helligkeit der von den lichtemittierenden Quellen (2) erzeugten Strahlung und/oder zur Verstärkung der elektrischen Signale der fotoempfindlichen Elemente (3) dienen.

24. Sensorelement nach Anspruch 23, **dadurch gekennzeichnet**, daß auf der Trägerschicht (1) hoch integrierte, elektronische Schaltkreise vorhanden sind, welche Aufgaben der Signalauswertung übernehmen.

## Claims

1. Sensing element for determining the concentrations of materials in gaseous and liquid samples with a carrier layer and an indicator layer with at least one characteristic of the indicator substance changing on interaction with the material to be measured in accordance with its concentration, characterised in that there is arranged on the carrier layer (1) a substrate (3') in which are integrated at least one photo-sensitive element (3) and its electric contacts in a planar arrangement, that the substrate (3') has at least one region (20; 20') which is transparent to the exciting radiation (11) and that the indicator substance (7, 7') of the the indicator layer (6) excited by the exciting radiation (11) is in optical contact with the photo-sensitive elements (3) through a coupling layer (5) which is transparent to the exciting radiation (11) and the radiation (12) to be measured.

2. Sensing element according to claim 1 characterised in that a coupling layer (5) which has a refractive index $n_2$ together with edge layers (21, 22) present on both sides of the coupling layer and having a refractive index $n_1$ forms a planar light conductor for the radiation (12) to be measured, where $n_2 > n_1$, that the edge layer (21) facing towards the sample has at least one recess (23) in which the indicator layer (6) is present, that each recess (23) - looked at in the direction of the exciting radiation (11) - lies over a region (20) which is transparent to the exciting radiation (11), and that the total reflection of the radiation (12) to be measured is neutralised in the region of the photo-sensitive element (3).

3. Second element according to claim 1 or 2 characterised in that only one region (20) which is transparent to the exciting radiation (11) is present and the photo-sensitive element (3), for example a photo-diode, has a circular structure which is concentric with that region.

4. Sensing element according to claim 1 characterised in that transparent regions (20') are arranged inclined in the substrate (3') so that the exciting radiation (11) strikes the indicator layer (6) preferably at an angle α between 40 and 60° and excites the regions of the indicator layer (6) lying above the photo-sensitive elements (3).

5. Sensing element according to one of claims 1 to 3 characterised in that the end (24) of a light conductor (25), in particular a single fibre, terminates in the regions (20) transparent to the exciting radiation (11).

6. Sensing element according to one of claims 1 to 5 characterised in that a filter layer (10; 10'), in particular an optical interference filter, is present in the regions (20; 20') transparent to the exciting radiation (11).

7. Sensing element for determining concentrations of materials in gaseous and liquid samples, with a carrier layer and an indicator layer with at least one indicator substance, at least one optical characteristic of the indicator substance altering on interaction with the material to be measured in accordance with its concentration, characterised in that photo-sensitive elements present on the carrier layer (1) in micro-zones (b, b') and light-emitting sources (2) arranged in adjacent micro-zones (a), together with their electrical feed and take-off conductors, are integrated in a planar layout, and that the indicator substance (7, 7') of the indicator layer (6) excited by the exciting radiation (11) of the light-emitting sources (2) is in optical contact with the photo-sensitive elements (3), the photo-sensitive elements (3) lying in front of or alongside the light-emitting sources (2) in the direction of the exciting radiation (11).

8. Sensing element according to claim 7 characterised in that an optically transparent coupling layer (5) is present between the light-emitting sources (2) and/or photo-sensitive elements (3) on the one hand and the indicator layer (6) on the other hand.

9. Sensing element according to claim 7 or 8 characterised in that the semi-conductor structures forming the light-emitting sources (2) and if necessary their electrical contacts are integrated on a separate substrate (13) which is mounted in those micro-zones (a) of the carrier layer (1) which are occupied by light-emitting sources (2).

10. Sensing element according to one of claims 7 to 9 characterised in that the micro-zones (a, b) are arranged on the carrier layer (1) in a chequer-board pattern, the micro-zones (a, b) being occupied alternately by a light-emitting source (2) and a photo-sensitive element (3).

11. Sensing element according to one of claims 7 to 9 characterised in that the micro-zones (a, b, b') are arranged on the carrier layer (1) in a honeycomb layout, whereby respectively a light-emitting source (2) has associated with it at least two equidistant photo-sensitive elements (3) provided with different filter materials.

12. Sensing element according to one of claims 7 to 9 characterised in that the light-emitting sources (2), preferably LEDs, are each surrounded by a photo-sensitive element (3) of annular structure, preferably by a photo-diode or a photo-transistor.

13. Sensing element according to claim 7 or 8 characterised in that the light-emitting sources (2) on the one hand and the photo-sensitive elements (3) on the other hand are present in mutually parallel planes, the light-emitting sources (2) preferably forming a coherent luminescent layer (14) which is mounted on the carrier layer (1), and that the semi-conductors structures forming the photo-sensitive elements (3) are integrated on a substrate (15) overlying the luminescent layer (14) and that the substrate (15) has regions (16) which allow optical contact between the luminescent layer (14) and the indicator layer (6).

14. Sensing element according to claim 13 characterised in that an optical filter layer (17) is present between the luminescent layer (14) and the substrate (15) which carries the photo-sensitive elements (3).

15. Sensing element according to claim 1 or 8 characterised in that the coupling layer (5) has a refracting structure (19) for example a periodic grating structure, which deflects the exciting radiation (11) into the regions of the indicator layer (6) which lie above the photo-sensitive elements (3).

16. Sensing element according to one of claims 1 to 15 characterised in that the photo-sensitive elements (3) and/or the light-emitting sources (2) are additionally coated with an optical filter layer (8,8'), preferably with an optical interference filter.

17. Sensing element according to one of claims 1 to 15 characterized in that an interference filter (10'') is present between the coupling layer (5) and the indicator layer (6) and has, for predetermined angles of incidence ($\alpha$, $\beta$), different coefficients of transmission for the exciting radiation (11) and the fluorescent radiation (12) emitted by the indicator substance (7, 7').

18. Sensing element according to one of claims 1 to 17 characterized in that micro-zones (b,b') associated with individual photo-sensitive elements (3) are present in the indicator layer (6) and comprise different indicator substances (7, 7').

19. Sensing element according to one of claims 1 to 18 characterised in that the indicator layer (6) comprises a porous glass layer in which the indicator substance (7, 7') is held immobile.

20. Sensing element according to one of claims 1 to 18 characterised in that the indicator layer (6) comprises for example spun-on or rolled-on silicon, in which the indicator substance (7, 7') is present.

21. Sensing element according to one of claim 1 to 18 characterised in that the indicator molecules of the indicator substance (7, 7') are present in a form directly chemically bonded to the optical coupling layer (5).

22. Sensing element according to one of claims 1 to 18 characterised in that the indicator substances (7, 7') are applied by micro-screen printing or by vapour-deposition.

23. Sensing element according to one of claims 1 to 22, characterised in that electronic circuits are integrated onto the carrier layer (1) and any further substrates (13, 15) bonded to it, which circuits serve for regulating the brightness of the radiation generated by the light-emitting sources (2) and/or for amplifying the electrical signals from the photo-sensitive elements (3).

24. Sensing element according to claim 23 characterised in that highly integrated electronic circuits are present on the carrier layer (1), and handle the task of evaluating the signals.

**Revendications**

1. Elément capteur pour la détermination de concentrations de substances dans des échantillons gazeux ou liquides, comportant une couche de support ainsi qu'une couche d'indicateur contenant au moins une substance indicatrice, au moins une propriété optique de la substance indicatrice se modifiant lors d'interaction avec la substance à mesurer, en fonction de la concentration de celle-ci, caractérisé en ce que sur la couche de support (1) est disposé un substrat (3') dans lequel sont intégrés en disposition planaire au moins un élément photosensible (3) et ses contacts électriques, en ce que le substrat (3') présente au moins une zone (20, 20') qui est transparente au rayonnement d'excitation (11), et en ce que la substance indicatrice (7, 7') de la couche d'indicateur (6), excitée par le rayonnement d'excitation (11), se trouve en contact optique avec les éléments photosensibles (3) par l'intermédiaire d'une couche de couplage (5) transparente au rayonnement d'excitation (11) et au rayonnement à mesurer (12).

2. Elément capteur selon la revendication 1, caractérisé en ce que la couche de couplage (5), présentant un indice de réfraction $n_2$, forme conjointement avec les couches limites (21, 22) se trouvant des deux côtés de la couche de couplage, ayant un indice de réfraction $n_1$, un guide de lumière planaire pour le rayonnement à mesurer (12), $n_2$ étant > $n_1$, en ce que la couche limite (21), regardant l'échantillon, présente au moins un évidement (23) qui reçoit la couche d'indicateur (6), en ce que chaque évidement (23), vu en direction du rayonnement d'excitation, se trouve au-dessus d'une zone (20) transparente au rayonnement d'excitation (11), et en ce que la réflexion totale du rayonnement à mesurer (12) est annulée dans la zone des éléments photosensibles (3).

3. Elément capteur selon la revendication 1 ou 2, caractérisé en ce que seule une zone (20) transparente au rayonnement d'excitation (11) est présente et l'élément photosensible (3), par exemple une photodiode, présente une structure circulaire concentrique à celle-ci.

4. Elément capteur selon la revendication 1, caractérisé en ce que des zones transparentes (20') sont disposées en oblique dans le substrat (3'), de manière que le rayonnement d'excitation (11) frappe la couche d'indicateur (6) de préférence avec un angle $\alpha$ entre 40 et 60° et excite les zones de la couche d'indicateur (6) qui se trouvent au-dessus des éléments photosensibles (3).

5. Elément capteur selon l'une quelconque des revendications 1 à 3, caractérisé en ce que l'extrémité (24) d'un guide de lumière (25), en particulier d'une monofibre, se termine dans les zones (20) transparentes au rayonnement d'excitation (11).

6. Elément capteur selon l'une quelconque des revendications 1 à 5, caractérisé en ce qu'une couche filtrante (10, 10'), en particulier un filtre optique interférentiel, se trouve dans les zones (20), 20') transparentes au rayonnement d'excitation (11).

7. Elément capteur pour la détermination de concentrations de substances dans des échantillons liquides ou gazeux, comportant une couche de support ainsi qu'une couche d'indicateur contenant au moins une substance indicatrice, au moins une propriété optique de la substance indicatrice se modifiant lors d'interaction avec la substance à mesurer, en fonction de la concentration de celle-ci, caractérisé en ce que des éléments photosensibles (3), présents dans des micro-zones (b , b'), ainsi que des sources (2) émettrices de lumière, disposées dans des micro-zones voisines (a), conjointement avec leur lignes électriques d'arrivée et de sortie, sont intégrés en disposition planaire sur la couche de support (1), et en ce que la substance indicatrice (7, 7') de la couche d'indicateur (6), excitée par le rayonnement d'excitation (11) des sources (2) émettrices de lumière, se trouve en contact optique avec les éléments photosensibles (3), les éléments photosensibles (3) se trouvant en direction du rayonnement d'excitation (11) avant ou à côté des sources (2) émettrices de lumière.

**8.** Elément capteur selon la revendication 7, caractérisé en ce qu'une couche de couplage (5) optiquement transparente se trouve entre les sources émettrices de lumière (2) et/ou les éléments photosensibles (3) d'une part, et la couche d'indicateur (6) d'autre part.

**9.** Elément capteur selon la revendication 7 ou 8, caractérisé en ce que les structures semi-conductrices formant les sources émettrices de lumière (2), et éventuellement leurs contacts électriques, sont intégrés sur un substrat propre (13), lequel substrat (13) est appliqué dans les micro-zones (a) de la couche de support (1) qui sont occupées par des sources émettrices de lumière (2).

**10.** Elément capteur selon l'une quelconque des revendications 7 à 9, caractérisé en ce que les micro-zones (a, b) sont disposées en damier sur la couche de support (1), les micro-zones (a, b) étant occupées alternativement par une source émettrice de lumière (2) et par un élément photosensible (3).

**11.** Elément capteur selon l'une quelconque des revendications 7 à 9, caractérisé en ce que les micro-zones (a, b, b') sont disposées en nid d'abeilles sur la couche de support (1), au moins deux éléments photosensibles munis d'un matériau filtrant différent étant affectés à chaque source émettrice de lumière (2).

**12.** Elément capteur selon l'une quelconque des revendication 7 à 9, caractérisé en ce que les sources émettrices de lumière (2), de préférence des LED (diodes électroluminescentes) sont entourées chacune par un élément photosensible (3) de structure en forme d'anneau circulaire, de préférence par une photodiode ou un phototransistor.

**13.** Elément capteur selon la revendication 7 ou 8, caractérisé en ce que les sources émettrices de lumière (2) d'une part, et les élément photosensibles (3) d'autre part, se trouvent dans des plans parallèles entre eux, les sources émettrices de lumière (2) formant de préférence une couche luminescente cohérente (14) qui est appliquée sur la couche de support (1), et en ce que les structures semi-conductrices formant les éléments photosensibles (3) sont intégrées sur un substrat (15) recouvrant la couche luminescente (14), et en ce que le substrat (15) comporte des zones (16) qui permettent un contact optique de la couche luminescente (14) avec la couche d'indicateur (6).

**14.** Elément capteur selon la revendication 13, caractérisé en ce qu'une couche filtrante optique (17) se trouve entre la couche luminescente (14) et le substrat (15) portant les éléments photosensibles (3).

**15.** Elément capteur selon la revendication 1 ou 8, caractérisé en ce que la couche de couplage (5) présente une structure de diffraction (19), par exemple une structure en réseau périodique, qui dirige le rayonnement d'excitation (11) dans les zones de la couche d'indicateur (6) qui se trouvent au-dessus des éléments photosensibles (3).

**16.** Elément capteur selon l'une quelconque des revendications 1 à 15, caractérisé en ce que les éléments photosensibles (3) et/ou les sources émettrices de lumière (2) sont en plus revêtus d'une couche filtrante (8, 8'), de préférence d'un filtre optique interférentiel.

**17.** Elément capteur selon l'une quelconque des revendications 1 à 15, caractérisé en ce qu'entre la couche de couplage (5) et la couche d'indicateur (6) se trouve un filtre interférentiel (10'') qui présente, pour un angle d'incidence déterminé ($\alpha$, $\beta$), différents coefficients de transmission pour le rayonnement d'excitation (11) et pour le rayonnement fluorescent (12) émis par la substance indicatrice (7, 7').

**18.** Elément capteur selon l'une quelconque des revendications 1 à 17, caractérisé en ce que dans la couche d'indicateur (6) sont présentes des micro-zones (b, b') affectées à des éléments photosensibles individuels (3), micro-zones qui présentent des substances indicatrices différentes (7, 7').

**19.** Elément capteur selon l'une quelconque des revendications 1 à 18, caractérisé en ce que la couche d'indicateur (6) est constitués d'une couche de verre poreux, dans laquelle est immobilisée la substance indicatrice (7, 7').

**20.** Elément capteur selon l'une quelconque des revendications 1 à 18, caractérisé en ce que la couche d'indicateur (6) est constituée de silicone déposé par exemple par projection centrifuge ou par enduction au rouleau, dans lequel se trouve la substance indicatrice (7, 7').

**21.** Elément capteur selon l'une quelconque des revendications 1 à 18, caractérisé en ce que les molécules indicatrices de la substance indicatrice (7, 7') se trouvent directement liées chimiquement à la couche de couplage optique (5).

22. Elément capteur selon l'une quelconque des revendications 1 à 18, caractérisé en ce que les substances indicatrices (7, 7') sont applicables au moyen de micro-sérigraphie ou par dépôt par vaporisation.

23. Elément capteur selon l'une quelconque des revendications 1 à 22, caractérisé en ce que sur la couche de support (1) et éventuellement sur d'autres substrats (13, 15) liés à celle-ci, sont simultanément intégrés des circuits électroniques qui servent au réglage de la luminosité du rayonnement engendré par les sources émettrices de lumière (2) et/ou à l'amplification des signaux électriques des éléments photosensibles (3).

24. Elément capteur selon la revendication 23, caractérisé en ce que des circuits électroniques hautement intégrés sont présents sur la couche de support (1), lesquels remplissent des fonctions de l'évaluation des signaux.

_Fig. 1_

_Fig. 2_

_Fig. 3_

_Fig. 4_

Fig. 5

Fig. 7

Fig. 8

Fig. 9

_Fig.6_

_Fig.10_

_Fig.11_